# EUROPEAN PATENT APPLICATION

(11) **EP 4 066 980 A1**
(43) Date of publication of application: **05.10.2022**
(21) Application number: 22154123.8
(22) Date of filing: 29.01.2022
(51) Int. Cl.: B23K 26/351, H01C 1/034, H01C 1/142, H01C 7/00, H01C 17/242

(54) **LASER-TRIMMED RESISTOR AND MANUFACTURING METHOD THEREOF**

(30) Priority: 30.03.2021 TW 110111541
(71) Applicant: Viking Tech Corporation, Hukou Township Hsin chu 303 (TW)
(72) Inventor: LU, CHI-YU, Hsinchu County (TW); CHIU, CHENG-CHUNG, Hsinchu County (TW)
(74) Representative: Schwerbrock, Florian

(57) **Abstract**

The present invention proposes a resistor with a transparent protective layer, which is formed by a chemical vapor deposition (CVD) process. The laser is able to penetrate the transparent protective layer to reach and trim the resistance layer.

## Description

### BACKGROUND OF THE INVENTION

### 1. FIELD OF THE INVENTION

The present invention relates to a laser-cutting resistor and manufacturing method thereof. In particular, it uses a chemical vapor deposition (CVD) process to form a transparent protective layer before trimming its resistance.

### 2. DESCRIPTION OF THE PRIOR ART

A protective layer of a resistor, having a good corrosion resistance and a chemistry stability, is non-transparent in general. Therefore, a laser trimming is applied, after forming a resistance layer and before forming the protective layer, to get a desired resistance pattern and value. The resistance layer (metal layer) is exposed under mist and easily corroded by water and sulfur gas during laser trimming.

### SUMMARY OF THE INVENTION

The invention proposes a protective layer on the resistance layer which is penetrable by a laser. The transparent protective layer is deposited by chemical vapor deposition (CVD) process. The resistance layer can be trimmed by the laser after forming the protective layer. Therefore, it can reduce the risk that the resistance layer is eroded by water/sulfur gas during manufacturing process and in addition, enhance the accuracy of cutting the resistance layer.

The invention provides a resistor, comprising:
a resistance layer disposed on a substrate;
two electrodes disposed on both ends of the substrate and connected with the resistance layer; and
a protective layer disposed on the resistive layer by chemical vapor deposition (CVD), wherein the protective layer is penetrable by a laser which is configured to trim the resistance layer.

The invention provides a method of manufacturing a resistor, comprising:
forming a resistance layer on a substrate;
forming two electrodes on both ends of the substrate, wherein the two electrodes are connected with the resistance layer; and
forming a protective layer on the resistance layer by a chemical vapor deposition (CVD) process, wherein the protective layer is penetrable by a laser which is configured to trim the resistance layer.

### BRIEF DESCRIPTION OF THE DRAWINGS

FIG. 1 is a top view of a resistor of the present invention.
FIG. 2 is a side view of a resistor of the present invention.
FIG. 3 is a flow chart of the manufacturing of a resistor of the present invention.

### DESCRIPTION OF THE PREFERRED EMBODIMENTS

Various embodiments of the present invention will be described in detail as below, and the drawings will be used as examples to help readers to have a better understanding. In addition to these detailed descriptions, the present invention can also be widely implemented in other embodiments. Any substitutions, modifications, and equivalent changes of the embodiments should be understood to be included in the scope of the present invention. The scope of patents should be based on the scope of the claims. It should be noted that the drawings are for illustrative purposes only, and do not represent the actual size or quantity of the components. Some details may not be completely drawn in order to keep the drawings concise.

The present invention proposes to deposit a transparent material (such as silicon dioxide), which can be done by using a CVD process, on the resistance layer before laser trimming. Then a laser with a specific wavelength is used to trim the resistance layer to get a desired pattern and value. The laser is selected to have a high penetrability and low reflectivity to the specific thickness and the material of the protective layer, that means the protective layer is relatively transparent to the selected laser.

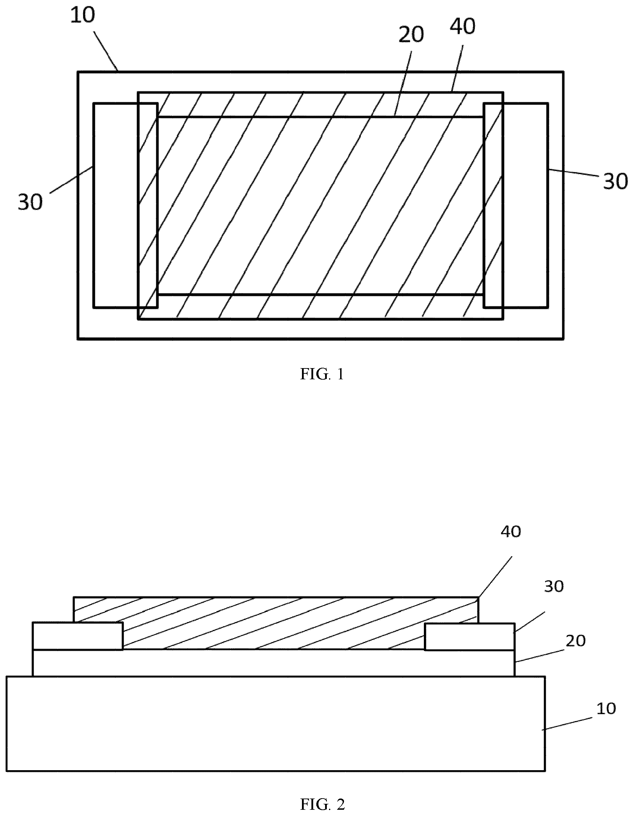

FIG. 1 and FIG. 2 are perspective diagrams of a top view and a side view of a resistor respectively. In this embodiment, the resistor includes a substrate 10, a resistance layer 20, an electrode layer, and a transparent protective layer 40 from the bottom to top. The resistance layer 20 basically covers the substrate 10, and the electrode layer is formed on both ends of the substrate 10 and connected to the resistance layer 20, configured to be electrodes 30. Then the transparent protective layer 40 is formed on the resistive layer 20, and a CVD process is used in this embodiment. A laser-cutting process is applied on the resistor to trim the resistance layer 20 to form a fine pattern. In general, the resistance layer 20 has a high resistivity and low temperature resistivity such as chromium silicon, nickel chromium or tantalum nitride. The transparent protective layer 40 is transparent to the laser, such as silicon dioxide or silicon nitride. The thickness of the protective layer 40 ranges from 300 nm to 30µm, prefer to 1µm ~10µm.

In one embodiment, the transparent protective layer 40 covers resistance layer and part of both electrodes 30.

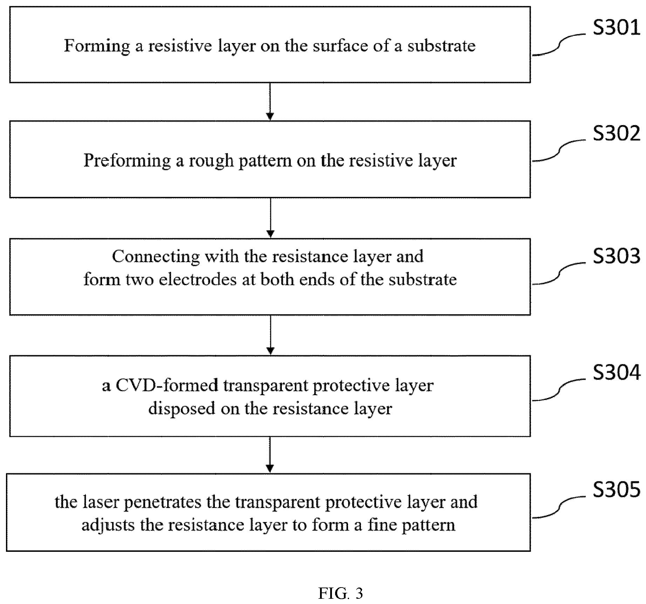

For example, FIG. 3 is a schematic flow chart of the manufacturing a resistor of the present invention. The manufacturing method includes forming a resistance layer 20 on the substrate 10 by a sputtering process, optionally preforming the resistance layer 20 into a rough pattern on by a lithography process. An electrode layer is formed on both ends of the substrate and connected to the resistance layer 20 to form two electrodes 30 by using a plating process. A protective layer 40 is formed to cover the resistance layer 20 and part of electrodes by a CVD process. Finally, a laser is applied to trim the resistance layer. It is obvious that the laser is selected to be able to penetrate the protective layer 40 to trim the resistance layer to get a desired pattern and resistance value, as shown in step S301 to step 305.

In an embodiment, the CVD, applied to form the protective layer, is operating at the temperature less than 150°C, preferably 70°C to 149°C, and the deposition time is 10 to 120 minutes, preferably 12 to 60 minutes. The wavelength of the laser is 266nm~1,200nm, preferably 355nm~1,064nm, and the power of the laser is 1W-100W, preferably 5W~50W.

In other embodiments, a refractory/barrier layer (not shown in the figures) is formed between the substrate 10 and the resistance layer 20, and the refractory/barrier layer can protect the substrate 10 from being damaged by the laser.

The transparent protective layer can be formed by a CVD process or an epoxy printing process. Under the situation at temperature 85°C and relative humidity (RH) 85%, the resistors manufactured by the two process are tested for 1,000 hours and that made by the CVD process is more stable relatively, referred to Table 1.

**Table 1**

| manufacturing process of protective layer | resistance change rate (ΔR%) |
|---|---|
| chemical vapor deposition | <0.03% |
| general printing (Epoxy) | <0.1% |

In summary, the transparent protective layer formed by a CVD process has a better adhesion to the resistance layer, a smooth surface to have a better flatness and a lower scattering to enhance the accuracy of laser-cutting. The laser-cutting process can be applied to trim the resistors to obtain the expected resistance value.

## Claims

1. A resistor, comprising:
a resistance layer disposed on a substrate;
two electrodes disposed on both ends of the substrate and connected with the resistance layer; and
a protective layer disposed on the resistive layer by chemical vapor deposition (CVD), wherein the protective layer is penetrable by a laser which is configured to trim the resistance layer.

2. The resistor according to claim 1, wherein the resistance layer is cut by the laser to form a specific pattern.

3. The resistor according to claim 1, further comprising a refractory/barrier layer disposed between the substrate and the resistor layer, wherein the refractory/barrier layer is configured to protect the substrate from the laser.

4. The resistor according to claim 1, wherein the protective layer is silicon dioxide or silicon nitride.

5. The resistor according to claim 1, wherein the thickness of the protective layer is 300 nm to 30 µm.

6. A method of manufacturing a resistor, comprising:
forming a resistance layer on a substrate;
forming two electrodes on both ends of the substrate, wherein the two electrodes are connected with the resistance layer; and
forming a protective layer on the resistance layer by a chemical vapor deposition (CVD) process, wherein the protective layer is penetrable by a laser which is configured to trim the resistance layer.

7. The method according to claim 6, wherein the CVD process is operating at temperature 70°C to 149°C for 10 to 120 minutes.

8. The method according to claim 6, further comprising cutting the resistance layer by the laser to form a pattern.

9. The method according to claim 6, wherein the wavelength of the laser is 266nm~1,200nm.

10. The method according to claim 6, further comprising forming a refractory/barrier layer on the substrate before the step of forming the resistance layer.
